**Europäisches Patentamt**

**European Patent Office**

**Office européen des brevets**

(11) Veröffentlichungsnummer: **0 032 980**

**A1**

# (12) EUROPÄISCHE PATENTANMELDUNG

(21) Anmeldenummer: **80106845.3**

(22) Anmeldetag: **06.11.80**

(51) Int. Cl.³: **H 02 P 3/12**
**E 05 B 47/00**

(30) Priorität: **24.01.80 DE 3002457**

(43) Veröffentlichungstag der Anmeldung:
**05.08.81 Patentblatt 81/31**

(84) Benannte Vertragsstaaten:
**FR GB SE**

(71) Anmelder: **VDO Adolf Schindling AG**
**Gräfstrasse 103**
**D-6000 Frankfurt/Main(DE)**

(72) Erfinder: **Collonia, Harald**
**Zum Talblick 12**
**D-6246 Glashütten/Ts.(DE)**

(74) Vertreter: **Könekamp, Herbert, Dipl.-Ing.**
**Sodener Strasse 9**
**D-6231 Schwalbach(DE)**

(54) **Elektromotorische Türverriegelungseinrichtung, insbesondere für Kraftfahrzeuge.**

(57) Bei einer elektromotorischen Türverriegelungseinrichtung für Kraftfahrzeuge mit je einem für eine Tür oder dergleichen vorgesehenen Stellelement, das einen mit der Schloßmechanik gekuppelten Stellmotor (4) sowie eine Steuerscheibe umfaßt, die den Stellmotor nach erfolgter Verstellung der Schloßmechanik abschaltet, ist parallel zu dem Stellmotor (4) die Laststromstrecke eines gesteuerten Halbleiterschalters (6) angeordnet, in eine Stromversorgungsleitung (3a, 3b) zu diesen parallel angeordneten Elementen (4, 6) eine von einer Betriebsspannungsquelle in Durchlaßrichtung beaufschlagte Diode (5) eingeschaltet und eine Steuerelektrode (7) des Halbleiterschalters (6) derart an die Stromversorgungsleitung (3a, 3b) angeschlossen ist, daß der Halbleiterschalter bei eingeschalteter Stromversorgungsleitung gesperrt ist und bei ausgeschalteter Stromversorgungsleitung den Stellmotor kurzschließt.

EP 0 032 980 A1

Croydon Printing Company Ltd.

VDO Adolf Schindling AG          Gräfstraße 103
                                 6000 Frankfurt/Main

### Elektromotorische Türverriegelungsein-
### richtung, insbesondere für Kraftfahrzeuge

Die Erfindung geht aus von einer elektromotorischen Türverriegelungseinrichtung, insbesondere für Kraftfahrzeuge, mit je einem für eine Tür oder dergleichen vorgesehenen Stellelement, das einen mit der Schloßmechanik gekuppelten Stellmotor sowie eine Steuerscheibe umfaßt, die den Stellmotor nach erfolgter Verstellung des Schloßmechanismus abschaltet.

Derartige bekannte elektromotorische Türverriegelungseinrichtungen dienen dazu, sämtliche Türen und gegebenenfalls auch den Kofferraumdeckel oder die Tankklappe zu entriegeln oder zu verriegeln, wenn eine der mit einer besonderen Einrichtung ausgestatteten Türen, beispielsweise die Fahrertür oder die Beifahrertür durch Drehen eines Schlüssels abgeschlossen werden. Hierzu ist jedem Schloßmechanismus einer Tür das oben definierte Stellelement zugeordnet. Das Stellelement umfaßt als Stellmotor einen Gleichstrommotor, der über ein Getriebe mit der Schloßmechanik gekuppelt ist. Die Steuerscheibe kann als Schaltsegmentscheibe ausgebildet sein und hat die Aufgabe, den Stellmotor abzuschalten, wenn die jeweils neue Verriegelungs- oder Entriegelungsstellung erreicht ist.

Bei dem Abschalten des Stellmotors nach erfolgter Verstellung der Schloßmechanik tritt jedoch das Problem auf, daß der Motor infolge des Schwungmoments seines Rotors und der Trägheit der mit ihm verbundenen mechanischen Elemente weiterläuft bzw. nachläuft, und zwar je nach seiner Drehzahl beim Abschalten und nach den jeweiligen Reibungswiderständen, die auch von der Temperatur abhängen, um unbestimmte Drehwinkel. Dies hat in der Praxis zur Folge, daß eine sehr große Stellungsungenauigkeit der Stellelemente auftritt, die im Extremfall sogar die sichere Funktion dieser Stellelemente gefährden kann.

Zu der vorliegenden Erfindung gehört daher die Aufgabe, die Stellungsungenauigkeit der Stellelemente herabzusetzen, um eine sichere Funktion der Türverriegelungseinrichtung zu gewährleisten.

Diese Aufgabe wird erfindungsgemäß dadurch gelöst, daß parallel zu dem Stellmotor die Laststromstrecke eines gesteuerten Halbleiterschalters angeordnet ist, daß in eine Stromversorgungsleitung zu diesen parallel angeordneten Klemmen eine von einer Betriebsspannungsquelle in Durchlaßrichtung beaufschlagte Diode angeordnet ist und daß eine Steuerelektrode des Halbleiterschalters derart an die Stromversorgungsleitung angeschlossen ist, daß der Halbleiterschalter bei eingeschalteter Stromversorgungsleitung gesperrt ist und bei ausgeschalteter Stromversorgungsleitung den Gleichstrommotor kurzschließt.

- 3 -

Die erfindungsgemäße elektromotorische Türverriegelungseinrichtung wirkt in der Weise, daß die Stellelemente so lange in normaler Weise mit dem von der Betriebsspannungsquelle abgegebenen Strom über die Steuerscheibe beaufschlagt werden, als deren Kontakte geschlossen sind. D.h. in diesem Betriebsfall tritt keine Änderung der üblichen Funktion der Stellelemente ein. Sobald jedoch die Stromversorgung durch die Steuerscheibe unterbrochen wird, da die Verstellung der Schloßmechanik erfolgt ist und demgemäß die Stromversorgungsleitung zu dem Stellmotor abgeschaltet ist, wird die in dem Stellmotor durch dessen anfänglich weitere Drehung induzierte elektromotorische Kraft durch die Laststromstrecke des gesteuerten Halbleiterschalters kurzgeschlossen. Der Halbleiterschalter wird hierzu durch seine Steuerelektrode in diesem Betriebsfall der Abschaltung der Stromversorgungsleitung selbsttätig in den leitenden Zustand geschaltet.

Dadurch tritt der Vorteil ein, daß der kurzgeschlossene Stellmotor kurzzeitig abgebremst wird und kein nennenswerter Nachlauf des Stellmotors eintritt. Die Stellungsgenauigkeit wird dadurch wesentlich erhöht. Diese Türverriegelungseinrichtung zeichnet sich ferner dadurch aus, daß keine zusätzlichen Leitungen zum Erreichen dieser verbesserten Wirkung notwendig sind und daß insgesamt der zusätzliche Aufwand, der durch die nur wenigen benötigten elektronischen Bauelemente begrenzt ist, gering ist.

Eine wenig aufwendige Realisierung dieser elektrischen Türverriegelungseinrichtung besteht darin, daß

- 4 -

als gesteuerter Halbleiterschalter ein Transistor
vorgesehen ist, dessen Kollektor-Emitterstrecke
als Laststromkreis geschaltet ist und dessen Basis
als Steuerelektrode dient.

Hierzu können wenig aufwendige Transistoren mit verhältnismäßig weitgestreuten Kenndaten benutzt werden, da die Schaltungsanordnung zur Steuerung unkritisch ist. Diese besteht in einer bevorzugten Ausführung darin, daß der Kollektor eines pnp-Transistors an den auf negativem Potential liegenden Zweig
der Stromversorgungsleitung angeschlossen ist, dessen Emitter über die Diode mit dem auf positivem
Potential liegenden Zweig in Verbindung steht, und
daß die Basis einerseits direkt an den auf positivem Potential liegenden Zweig angeschlossen ist
und andererseits über einen Widerstand mit dem auf
negativem Potential liegenden Zweig verbunden ist.

Die Erfindung wird im folgenden anhand einer Zeichnung mit einer Figur näher erläutert, in der die Schaltungsanordnung zum selbsttätigen Kurzschließen des
Stellmotors bei abgeschalteter Stromversorgungsleitung dargestellt ist.

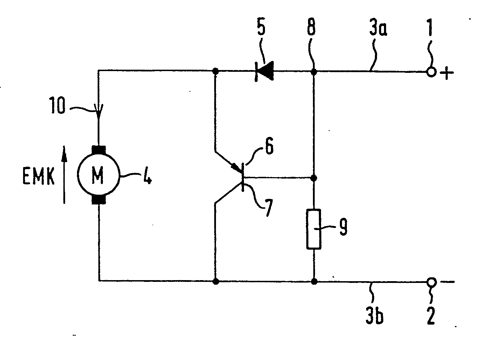

Die in der Zeichnung dargestellte Schaltungsanordnung
umfaßt also nur einen Teil einer üblichen elektromotorischen Türverriegelungseinrichtung, die im übrigen
konventionell mit einem Wechselschalter, der über
eine Kurbel mit der Schloßmechanik verbunden ist, für
jede schließbare und den Verriegelungsvorgang aller
Türen hervorrufende Einrichtung ausgestattet ist. In
der Zeichnung sind diese Wechselschalter nicht dargestellt, ebenso ist die Steuerscheibe nicht dargestellt,

0032980

- 5 -

deren Kontaktbahnen und Schleifer das Einschalten
des Motors zur Verstellung der Schloßmechanik und
das Abschalten nach erfolgter Verstellung, d.h.
Verriegelung oder Entriegelung, steuern.

In der Zeichnung sind mit 1 und 2 Klemmen bezeichnet, mit denen eine Stromversorgungsleitung eines
Stellmotors 4 über die nicht dargestellten Segmente
der Steuerscheibe an eine Betriebsspannungsquelle
angeschlossen sind. Der Zweig 3a liegt bei angeschlossener Stromversorgungsleitung auf positivem Potential
und der Zweig 3b auf negativem Potential.

In den Zweig 3a der Stromversorgungsleitung ist in
Durchflußrichtung gepolt eine Diode 5 eingeschaltet.
In Stromflußrichtung hinter der Diode ist zu dem Stellmotor 4 die Emitter-Kollektorstrecke eines Transistors
6 parallelgeschaltet, der als pnp-Transistor ausgebildet ist. Der Kollektor des Transistors 6 ist demgemäß
unmittelbar mit dem auf negativem Potential liegenden
Zweig 3b der Stromversorgungsleitung verbunden. Zur
Steuerung des Transistors ist dessen Basis einerseits
direkt mit dem Zweig 3a der Stromversorgungsleitung
verbunden, und zwar so, daß die Diode 5 zwischen der
Verbindungsstelle 8 der Basis 7 mit dem Zweig 3a und
der Abzweigung des Emitter-Anschlusses angeordnet ist.
Außerdem steht die Basis 7 über einen Widerstand 9
mit dem auf negativem Potential liegenden Zweig 3b
der Stromversorgungsquelle in Verbindung.

Die Einrichtung arbeitet in folgender Weise:
Wenn der Stellmotor 4 bei geschlossenen Kontakten der
Steuerscheibe mit der Betriebsspannungsquelle in Verbindung steht, fließt durch die Stromversorgungsleitung ein Strom in Richtung des Pfeils 10, und die Diode ist in Durchlaßrichtung beansprucht. Wegen der leitenden Diode liegt die Basis 7 praktisch auf dem Potential des Emitters des Transistors, so daß der Transistor gesperrt ist. Durch den Transistor wird dadurch in diesem Betriebszustand praktisch keine Wirkung auf den Stromkreis ausgeübt, d.h. durch den Lastkreis, gebildet durch die Emitter-Kollektorstrecke, wird kein Strom gezogen und die Betriebsspannungsquelle nicht belastet. Der Motor läuft in der gleichen Weise als ob der Transistor nicht vorhanden wäre.

Sobald aber der Stellmotor durch die Steuerscheibe abgeschaltet wird, tritt in dem in der Zeichnung dargestellten Schaltkreis keine Spannung mehr auf, die unmittelbar durch die Betriebsspannungsquelle erzeugt wird. Vielmehr wird in dem Stromkreis nur noch die durch den Motor erzeugte elektromotorische Kraft beaufschlagt. In diesem Fall ist die Diode 5 in Sperrrichtung beansprucht. An der nun in dem Stromkreis mit dem Stellmotor 4 und Widerstand 9 liegenden Diode fällt somit die Spannung ab, die fast der elektromotorischen Kraft entspricht. Die Basis liegt gegenüber dem Emitter des Transistors 6 auf negativem Potential und der Transistor leitet. Dadurch wird der Stellmotor 4 über die Emitter-Kollektorstrecke des Transistors kurzgeschlossen und die weitere Drehung des Stellmotors wirkungsvoll abgebremst.

Dadurch bleibt der Schloßmechanismus mit dem Verriegelungsmechanismus praktisch in der Stellung stehen,
die er beim Abschalten der Betriebsspannungsquelle
durch die Steuerscheibe innehatte.

VDO Adolf Schindling AG

Gräfstraße 103
6000 Frankfurt/Main

## Patentansprüche

1. Elektromotorische Türverriegelungseinrichtung, insbesondere für Kraftfahrzeuge, mit je einem für eine Tür oder dergleichen vorgesehenen Stellelement, das einen mit der Schloßmechanik gekuppelten Stellmotor sowie eine Steuerscheibe umfaßt, die den Stellmotor nach erfolgter Verstellung der Schloßmechanik abschaltet, <u>dadurch gekennzeichnet</u>, daß parallel zu dem Stellmotor (4) die Laststromstrecke eines gesteuerten Halbleiterschalters (6) angeordnet ist, daß in eine Stromversorgungsleitung (3a, 3b) zu diesen parallel angeordneten Elementen (4, 6) eine von einer Betriebsspannungsquelle in Durchlaßrichtung beaufschlagte Diode (5) angeordnet ist und daß eine Steuerelektrode (7) des Halbleiterschalters (6) derart an die Stromversorgungsleitung (3a, 3b) angeschlossen ist, daß der Halbleiterschalter bei eingeschalteter Stromversorgungsleitung gesperrt ist und bei ausgeschalteter Stromversorgungsleitung den Stellmotor kurzschließt.

2. Elektromotorische Türverriegelungseinrichtung nach Anspruch 1, dadurch gekennzeichnet, daß als gesteuerter Halbleiterschalter ein Transistor (6) vorgesehen ist, dessen Kollektor-Emitterstrecke als Laststromkreis geschaltet ist und dessen Basis (7) als Steuerelektrode dient.

3. Elektromotorische Türverriegelungseinrichtung nach Anspruch 2, dadurch gekennzeichnet,daß der Kollektor pnp-Transistor (6) an den auf negativem Potential liegenden Zweig (3b) der Stromversorgungsleitung angeschlossen ist, dessen Emitter über die Diode (5) mit dem auf positivem Potential liegenden Zweig (3a) in Verbindung steht, und daß die Basis (7) einerseits direkt an den auf positivem Potential liegenden Zweig (3a) angeschlossen ist und andererseits über einen Widerstand (9) mit dem auf negativem Potential liegenden Zweig (3b) verbunden ist.

**Europäisches Patentamt**

# EUROPÄISCHER RECHERCHENBERICHT

Nummer der Anmeldung

EP 80 10 6845

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe. soweit erforderlich. der maßgeblichen Teile | betrifft Anspruch | |
| X | DE - B - 1 227 985 (GLOBE INDUSTRIES)<br><br>* Spalte 1, Zeilen 28 bis 37; Abbildung 1 * | 1-3 | H 02 P 3/12<br>E 05 B 47/00 |
| X | US - A - 4 140 382 (CANON)<br><br>* Spalte 1, Zeilen 10 bis 34; Abbildung 1 * | 1-3 | |
| A | DE - A - 1 914 724 (VOLKSWAGEN)<br><br>* Seite 4, Zeilen 1-7 * | 1 | RECHERCHIERTE SACHGEBIETE (Int. Cl.³)<br><br>H 02 P 3/12<br>E 05 B 47/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-05-1981 | WEIHS |

EPA form 1503.1  06.78